**Europäisches Patentamt**

**European Patent Office**

**Office européen des brevets**

(19)

(11) Veröffentlichungsnummer : **0 472 516 A2**

(12) **EUROPÄISCHE PATENTANMELDUNG**

(21) Anmeldenummer : **91890183.6**

(51) Int. Cl.⁵ : **B23K 9/32**

(22) Anmeldetag : **19.08.91**

(30) Priorität : **22.08.90 AT 1724/90**

(43) Veröffentlichungstag der Anmeldung :
**26.02.92 Patentblatt 92/09**

(84) Benannte Vertragsstaaten :
**AT BE CH DE DK ES FR GB GR IT LI LU NL SE**

(71) Anmelder : **BÖHLER SCHWEISSTECHNIK
GESELLSCHAFT m.b.H.
Deuchendorf
A-8605 Kapfenberg (AT)**

(72) Erfinder : **Müller, Günter, Dipl.-Ing.
Gustav Mahlerweg 22
A-8605 Kapfenberg (AT)**

(54) **Behälter für Schweissdraht.**

(57)    Die Erfindung betrifft einen Behälter für Schweißdraht, umfassend einen zylindrischen, einen Schweißdrahtwickel umgebenden Außenmantel, einem zentral innerhalb des Außenmantels angeordneten, im wesentlichen zylindrischen Innenmantel, der vom Schweißdraht - wickel im Abstand umgeben ist, und einem auf der obersten Schicht des Drahwickels aufliegenden ringförmigen Abdeckteil, dessen Öffnung vom Innenmantel durchsetzt ist, wobei der Draht durch die Öffnung des Abdeckteils zwischen dem Innenrand des Abdeckteiles und dem Innenmantel abgezogen wird. Erfindungsgemäß ist vorgesehen, daß der Abdeckteil (1) im Raum zwischen dem Innenmantel (3) und dem Außenmantel (2) frei über die oberste Schicht des Drahtwickels (4) verschiebbar bzw. frei von die laterale Bewegung behindernden, den Außenmantel (2) und/oder Innenmantel (3) berührenden Hemmteilen, Vorsprüngen, Anbringungen od. dgl. ist.

Fig. 1

Fig. 3

Fig. 2

Die Erfindung betrifft einen Behälter für Schweißdraht, umfassend einen zylindrischen, einen Schweißdrahtwickel umgebenden Außenmantel, einen zentral innerhlab des Außenmantels angeordneten, im wesentlichen zylindrischen Innenmantel, der vom Schweißdrahtwickel im Abstand umgeben ist, und einen auf der obersten Schicht des Drahtwickels aufliegenden ringförmigen Abdeckteil, dessen Öffnung vom Innenmantel durchsetzt ist, wobei der Draht durch die Öffnung des Abdeckteiles zwischen dem Innenrand des Abdeckteiles und dem Innenmantel abgezogen wird.

Verpackungsbehälter dieser Art sind aus der Praxis zur Aufnahme von Schweißdraht bekannt; bei diesen Verpackungsbehältern wird Sorge getragen, daß ein Kippen des Abdeckteiles unterbleibt bzw. der Abdeckteil wird in seiner Bewegung gebremst oder behindert, insbesondere auch deshalb, um zu verhindern, daß der Abdeckteil beim Abziehen des Drahtes mitgenommen bzw. abgehoben wird. Der im Verpackungsbehälter in Schlingen angeordnete Draht ist über jede Schlinge einmal um seine eigne Achse verdreht und wird beim Abziehen rückverdreht, sodaß beträchtliche Kräfte auf den Abdeckteil ausgeübt werden können.

Ziel der Erfindung ist es, einen Verpackungsbehälter derart auszubilden, daß ein Aufstellen von Drahtschlingen vermieden wird, daß sich abgezogene Drahtschlingen nicht verheddern, keine Drahtschlingen sich am Abdeckteil bzw. zwischen dem Abdeckteil und der Innenwand des Behälters verklemmen und überdies die Herstellung des Behälters vereinfcht wird. Dies wird erfindungsgemäß bei einem Behälter der eingangs gennanten Art dadurch erreicht, daß der Abdeckteil im Raum zwischen dem Innenmantel und dem Außenmantel frei über die oberste Schicht des Drahtwickels verschiebbar bzw. frei von die laterale Bewegung behindernden, den Außenmantel und/oder den Innenmantel berührenden Hemmteilen, Vorsprüngen, Anbringungen od. dgl. ist.

Die Erfindung bringt den Vorteil, daß der Abdeckteil vom Draht leicht horizontal bzw. lateral bewegt werden kann, wodurch einerseits ein Verheddern des Drahtes mit dem Abdeckteil und einzelner Drahtschlingen untereinander vermieden wird und andererseits durch den Abdeckteil die Oberfläche des Drahtwickels geglättet wird bzw. sich abhebende Schlingen wieder an die Oberfläche des Drahtwickels angedrückt werden, sodaß ein definiertes störungsfreies Abziehen des Drahtes erreicht wird.

Es zeigt sich, daß es besonders vorteilhaft ist, wenn der Abdeckteil ein Flächengewicht von $\emptyset$,35 bis $\emptyset$,8, vorzugsweise $\emptyset$,4 bis $\emptyset$,7, insbesondere $\emptyset$,45 bis $\emptyset$,6 p je cm$^2$, bzw. einen Druck von ca. 35 bis 8$\emptyset$, vorzugsweise 4$\emptyset$ bis 7$\emptyset$, insbesondere 45 bis 6$\emptyset$ Pa, bezogen jeweils auf 1 mm Drahtdurchmesser besitzt. Durch eine derartige Bemessung des Flächendruckes wird ein Aufstellen von Drahtschlingen und ein Abheben bzw. Kippen des Abdeckteiles vermieden; je nach dem vorhandenen Drahtdurchmesser wird das Gewicht des Abdeckteiles gewählt. Vorteilhafterweise ist vorgesehen, daß der Abdeckteil auf seiner Oberseite Befestigungseinrichtungen für Gewichtsauflagen besitzt. Anstelle verschiedene Abdeckteile für verschiedene Drahtdurchmesser vorzu-sehen, kann durch Anbringung der Gewichtsauflagen, die verschiedenartige Formen aufweisen können, oder durch Ausnehmungen an der Oberseite sowie Durchbrüche das Gewicht des Abdeckteiles variiert und an den Drahtdurchmesser angepaßt werden.

Um eine leichte Bewegung des Abdeckteiles unter der Kraft des abzuziehenden Drahtes, welcher um den zylindrischen Innenmantel rotiert, zu erreichen, kann erfindungsgemäß vorgesehen sein, daß der Abdeckteil beim Abziehen des Drahtes mit seiner Außenringfläche bzw.- kante an der Innenfläche des Außenmantels oder mit seiner inneren Ringfläche bzw.- kante an der Außenfläche des Innenmantels abrollt bzw. abgleitet bzw. von diesen Flächen geführt ist. Damit wird einer geführten Bewegung bzw. Rotation des Abdeckteiles um den Innenmantel wenig Widerstand entgegengesetzt, sodaß auf den Draht vom Abdeckteil her nahezu keine horizontale Kraftkomponente ausgeübt wird.

Konstruktiv ist ferner vorgesehen, daß die Breite des ringförmigen Abdeckteiles die Dicke des Drahtwickels übersteigt bzw. daß der Durchmesser der Öffnung des Abdeckteiles kleiner ist als der Außendurchmesser des zylindrischen Innenmantels vermehrt um den Abstand zwischen dem Innenmantel und dem Drahtwickel. Ferner ist es zweckmäßig, wenn der Durchmesser der Öffnung des Abdeckteiles vermehrt um die Breite des Abdeckteiles kleiner ist als der Innenradius des Außenmantels vermehrt um den Außenradius des Innenmantels. Auf diese Weise wird dem Abdeckteil eine Bewegung zwischen dem Innenmantel und dem Außenmantel ermöglicht, wobei der Abdeckteil den gesamten Drahtwickel überstreicht, gleichzeitig jedoch ausreichend Spielraum gelassen, um den Draht durch die Öffnung des Abdeckteiles bzw. zwischen dem Innenrand des Abdeckteiles und dem Innenmantel ohne den Draht an seiner Aufdrillung zu hindern, abzuziehen.

Vorteilhaft ist es dabei, wenn die Breite des Abdekteiles etwa 1$\emptyset$ bis 25 %, vorzugsweise etwa 18 %, seines Außendurchmessers und 25 bis 35 %, vorzugsweise etwa 3$\emptyset$ %, seines Innendurchmessers beträgt.

Um die Bewegung des Abdeckteils über die obere Schicht des Drahtwickels leichtgänging zu gestalten, ist erfindungsgemäß vorgesehen, daß der Abdeckteil aus Kunststoff zumindest an der dem Drahtwickel zugekehrten Seite und den Stirnflächen riefenfrei, vorzugsweise mit einer Rauhtiefe kleiner als $\emptyset$,6 µm, vorzugs-weise kleiner als $\emptyset$,4 µm, ausgebildet ist.

Um aufstehende Drahtschlingen niederdrücken zu können, ist erfindungsgemäß vorgesehen, daß die untere Außenkante des Abdeckteiles und gegebenenfalls auch die unterer Innenkante der Öffnung gerundet ausgebildet sind. Dabei kann vorgesehen sein, daß der Radius der Abrundung der Höhe des Abdeckteiles entspricht.

Für den Transport kann es zweckmäßig sein, wenn im Innenmantel gegenüberliegende Längsschlitze vorgesehen sind, in die ein federbelasteter, den Deckelteil belastender Querstab oder dgl. einsetzbar ist. Die Feder kann dabei am Boden des Behälters befestigt sein und am Querstab, insbesondere in seiner Mitte, angreifen, welcher über dem Deckelteil den Innenmantel durchsetzend angeordnet wird.

Im folgenden wird die Erfindung anhand eines in den Zeichnungen dargestellten Ausführungsbeispieles näher beschrieben. Es zeigen Fig. 1 einen schematischen Schnitt durch einen erfindungsgemäßen Behälter für Schweißdraht, Fig. 2 eine schematische Draufsicht auf diesen Behälter und Fig. 3 eine Teilansicht.

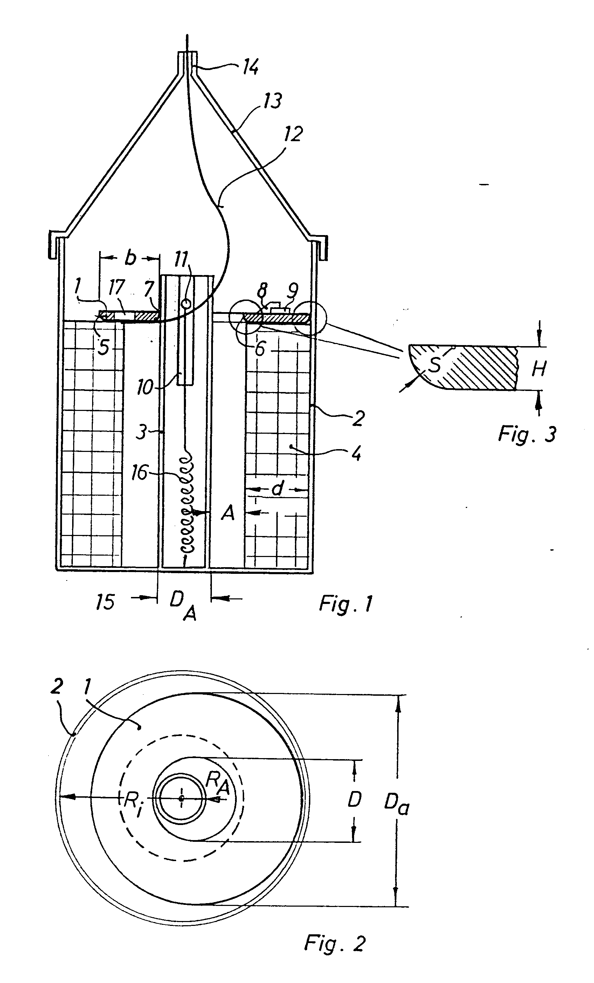

Gemäß Fig. 1 ist in einem von einem zylindrischen Außenmantel 2, einem auf diesen aufgesetzten Deckel 13 und einem Boden 15 gebildeten Behälter für Schweißdraht ein Schweißdrahtwickel 4 angeordnet, welcher in Schlingen gelegten, pro Schlinge einmal verdrehten, Schweißdraht 12 enthält. Der Schweißdrahtwickel 4 umgibt einen im wesentlichen zylindrischen Innenmantel 3 mit einem Abstand A. Dieser Abstand beträgt etwa $2\emptyset$ bis $4\emptyset$ % der Abdeckteilbreite b.

Der zylindrische Innenmantel 3 überragt den Drahtwickel 4 und durchsetzt die Öffnung 7 eines auf dem Drahtwickel 4 aufliegenden Abdeckteiles 1. Auf den Außenmantel 2 ist der konische Deckel 13 aufgesetzt, der eine mittige Abzugsöffnung 14 für den Draht 12 aufweist. Beim Abziehen rotiert der Draht 12 um den Innenmantel 3, wobei der Draht 12 pro gelegter Schlinge des Drahtwickels 4 einmal um seine eigene Achse aufgedreht wird und somit die dem Draht beim Legen der Schlingen erteilte Verdrillung wieder rückgängin gemacht wird; dabei treten beträchtliche Kräfte auf, die das Abziehen stören können.

Fig. 2 zeigt eine Draufsicht auf den Behälter bei abgenommenem Deckel 13 und man erkennt den Abdeckteil 1, den zylindrischen Innenmantel 3 und den Außenmantel 2. Der Draht 12 erteilt beim Abziehen dem Abdeckteil 1 eine laterale Verschiebung und eine Rotationsbewegung um den Innenmantel 3; bei einem Umlauf des Abdeckteiles 1 um den Innenmantel 3 wird die gesamte oberste Schicht des Drahtwickels 4 überstrichen und aufsteigende Drahtschlingen können niedergebügelt bzw. ein unkontolliertes Abziehen des Drahtes 12 verhindert werden. Es versteht sich, daß der erfindungsgemäße Behälter für Schweißdraht mit seiner Achse vertikal bzw. lotrecht aufgestellt wird, sodaß der Deckelteil 1 satt auf der obersten Drahtschlinge bzw. der obersten Fläche des Drahtwickels 4 aufliegt.

In Fig. 3 ist ein Detail des Abdeckteiles 1 dargestellt und man erkennt, daß die Außenfläche bzw. -kante 5 und gegebenenfalls auch die Innenfläche bzw.-kante 6 des Abdeckteiles 1 gerundet sind und zwar vorzugsweise mit einem Radius, welcher der Höhe H des Abdeckteiles 1 entspricht.

Im Innenmantel 3 sind zwei diametral gegenüberliegende Schlitze $1\emptyset$ ausgebildet, durch die ein Stab 11 durchführbar ist, welcher von einer Feder 16 belastbar ist, die am Boden 15 des Behälters 15 befestigt ist. Bei Durchstecken des Stabes 11 durch die Schlitze $1\emptyset$ wird der Abdeckteil 1 und somit der Drahtwickel 4 für den Transport federbelastet, sodaß ein Aufdrehen des Drahtwickels 4 bzw. ein Abspringen von Drahtschlingen vermieden werden kann.

Der Durchmesser D der Öffnung 7 des Abdeckteiles 1 ist kleiner als der Außendurchmesser $D_A$ des zylindrischen Innenmantels 3 vermehrt um den Abstand A zwischen dem Innenteil 3 und dem Drahtwickel 4.

Ferner übersteigt die Breite b des ringförmigen Abdeckteiles 1 die Dicke d des Drahtwickels 4, sodaß die gesamte Oberfläche bzw. Dicke des Drahtwickels 4 von Abdeckteil 1 überstrichen wird und die Drahtschlingen angepreßt werden können.

Vom Abdeckteil 1 können Befestigungseinrichtungen 8 getragen sein, mit denen Gewichtsauflagen 9 am Abdeckteil 1 befestigt werden können, um dem Abdeckteil 1 ein an den Durchmesser des Drahtes 12 angepaßtes Gewicht zu verleihen. Zur Anpassung des Gewichtes des Abdeckteiles 1 an, insbesondere geringe Drahtdurchmesser, können in diesem auch Ausnehmungen an dessen Oberseite und/oder Durchbrüche 17 angeordnet sein. Zu bemerken ist noch, daß das Gewicht des Abdeckteiles 1 auch vom Elastizitätsmodul des Drahtes bzw. seiner Steifigkeit und seiner Vorspannung beeinflußt wird; die angegebenen Werte beziehen sich auf handelsüblichen Schweißdraht.

## Patentansprüche

1. Behälter für Schweißdraht, umfassend einen zylindrischen, einen Schweißdrahtwickel umgebenden Außenmantel, einen zentral innerhalb des Außenmantels angeordneten, im wesentlichen zylindrischen Innenmantel, der vom Schweißdrahtwickel im Abstand umgeben ist, und einem auf der obersten Schicht des Drahtwickels aufliegenden ringförmigen Abdeckteil, wessen Öffnung vom Innenmantel durchsetzt ist, wobei der draht durch wie Öffnung des Abdeckteiles zwischen dem Innenrand des Abdeckteiles und dem Innenmantel abgezogen wird, dadurch gekennzeichnet, daß der Abdeckteil (1) im Raum zwischen dem Innenmantel (3) und dem Außenmantel (2) frei über die oberste Schicht des Drahtwickels (4) verschiebbar bzw. frei von die laterale Bewegung behindernden, den Außenmantel (2) und/oder den Innenmantel (3) berührenden Hemmteilen, Vorsprüngen, Anbringungen od. dgl. ist.

2. Behälter nach Anspruch 1, dadurch gekennzeichnet, daß der Abdeckteil (1) beim Abziehen des Drahtes (12) mit seiner Außenringflächen bzw. -kante (5) an der Innenfläche des Außenmantels (2) oder mit seiner inneren Ringfläche bzw.- kante (6) and der Außenfläche des Innenmantels (3) abrollt bzw. abgleitet bzw. von diesen Flächen in seiner Bewegung geführt ist.

3. Behälter nach Anspruch 1 oder 2, dadurch gekennzeichnet, daß die Breite (b) des ringförmigen Abdeckteiles (1) die Dicke (d) des Drahtwickels (4) übersteigt.

4. Behälter nach einem der Ansprüche 1 bis 3, dadurch gekennzeichnet, daß der Durchmesser (D) der Öffnung (7) des Abdeckteiles (1) kleiner ist als der Außendurchmesser ($d_A$) des zylindrischen Innenmantels (3) vermehrt um den Abstand zwischen dem Innenmantel (3) und dem Drahtwickel (4).

5. Behälter nach einem der Ansprüche 1 bis 4, dadurch gekennzeichnet, daß der Durchmesser (D) der Öffnung (7) des Abdeckteiles (1) vermehrt um die Breite (b) des Abdeckteiles (1) kleiner ist als der Innenradius ($R_i$) des Außenmantels (2) vermehrt um den Außenradius ($R_A$) des Innenmantels (3).

6. Behälter nach einem der Ansprüche 1 bis 5, dadurch gekennzeichnet, daß die untere Außenkante bzw.-fläche des Abdeckteiles (1) gerundet ausgebildet ist.

7. Behälter nach einem der Ansprüche 1 bis 6, dadurch gekennzeichnet, daß die untere Innenkante bzw. -fläche der Öffnung 7 des Abdeckteiles (1) gerundet ausgebildet ist.

8. Behälter nach einem der Ansprüche 1 bis 7, dadurch gekennzeichnet, daß der Radius (s) der Abrundungen der Höhe (H) des Abdeckteiles (1) entspricht.

9. Behälter nach einem der Ansprüche 1 bis 8, dadurch gekennzeichnet, daß der Abdeckteil (1) auf seiner Oberseite Befestigungseinrichtungen (8) für Gewichtsauflagen (9) besitzt.

10. Behälter nach einem der Ansprüche 1 bis 9, dadurch gekennzeichnet, daß der Abdeckteil (1) in seiner Oberseite Ausnehmungen oder Durchbrüche (17) besitzt.

11. Behälter nach einem der Ansprüche 1 bis 1Ø, dadurch gekennzeichnet, daß der Abdeckteil (1) aus Kunststoff an der dem Drahtwickel zugekehrten Seite und den Stirnflächen riefenfrei, vorzugsweise mit einer Rauhtiefe ($R_t$) kleiner als Ø,6 µm, vorzugsweise kleiner als Ø,4 µm, ausgebildet ist.

12. Behälter nach einem der Ansprüche 1 bis 11, dadurch gekennzeichnet, daß der Abdeckteil (1) die oberste Schicht des Drahtwickels (4) mit einer Kraft von Ø,35 bis Ø,8, vorzugsweise Ø,4 bis Ø,7, insbesondere Ø,45 bis Ø,6 p je cm², bzw. einem Druck von ca. 35 bis 8Ø, vorzugsweise 4Ø bis 7Ø, insbesondere 45 bis 6Ø Pa, bezogen jeweils auf 1 mm Drahtdurchmesser belastet.

13. Behälter nach einem der Ansprüche 1 bis 12, dadurch gekennzeichnet, daß die Breite (b) des Abdeckteiles (1) etwa 1Ø bis 25 %, vorzugsweise etwa 18 %, seines Außendurchmessers ($D_a$) und 25 bis 35 %, vor-zugsweise etwa 3Ø %, seines Innendurchmessers ( D) beträgt.

14. Behälter nach einem der Ansprüche 1 bis 13, dadurch gekennzeichnet, daß im Innenmantel (3) zwei gegenüberliegende Längsschlitze (1Ø) vorgesehen sind, in die ein federbelasteter, den Abdeckteil (1) in Richtung auf den Drahtwickel (4) belastender Querstab (11) einsetzbar ist.

Fig. 1

Fig. 3

Fig. 2